# EUROPEAN PATENT APPLICATION

(11) **EP 2 397 687 A1**
(43) Date of publication of application: **21.12.2011**
(21) Application number: 11386010.0
(22) Date of filing: 06.05.2011
(51) Int. Cl.: F03B 17/02, F03D 3/06, F03D 9/00, F03D 11/04

(54) **Off-shore and/or inland alternative energy source assembly**

(30) Priority: 11.05.2010 GR 20100100270
(71) Applicant: Protopsaltis, Dimitrios, 17121 N. Smirni (GR)
(72) Inventor: The designation of the inventor has not yet been filed

(57) **Abstract**

The present invention relates to a wind or water AES assembly for the production of electric energy which can be installed both on a platform (2) in the sea by the use of floats maintaining its position on the sea surface, and on the ground. The station consists of a wind generator (1) with horizontally rotating sails (11), which are kept in continuous motion either naturally or by the use of air turbines (9) arranged peripherally to the wind generator (1). The wind generator (1) ends via a clutch (16) and the transmission box (15) to an electricity generator (8) for energy production. Under the platform (2) or in wells (19), in case of installation of the ground, water energy units (5) are immersed, which consists of a vertical tube (13) and a spirally corresponding cylindrical tube (14) mounted thereon, which end to a shaft (6) and a mechanism converting the buoyancy force to rotational motion in the electricity generator (8).

## Description

The present invention relates to a two-unit electric-energy production assembly, which may be installed either on land or in sea and operate as a single plant or separately exploitable alternative energy sources (AES), such as wind energy or water energy. The said invention employs a continuous-operation, horizontal-rotation wind generator (WG) using sails instead of vertically rotating wings, thereby providing in limited surface and height more power in relation to wind generators using vertically rotating wings. The water-energy unit ensures the electrically activated motion of air turbines for continuous air flow on the sails of the WG, exploiting the water buoyancy.

In Europe, as well as worldwide, many efforts are focused on the development of systems utilizing alternative energy sources. In Germany by the end of 2010 the power of inland wind parks will reach 23700 MW and the power of the coastal ones 1300 MW. There are plans for the installation of other 30 off-shore wind parks in North Sea with 2000 wind generators of total power of 11 GW, i.e. each wind generator will have a power of 5.5 MW which is the highest for the vertically rotating wind generators. Respectively, in Great Britain, 7000 wind generators are intended to be installed, with 2 wind generators per mile along the coasts of the country. At the same time, there are plans for the exploitation of the tides in lake Strangford in North Ireland. Further, in Holland a series of gigantic wind parts is now installed at a distance of 20 kilometers from the coasts. In Denmark, the large wind park in the sea, having a total power of 400 MW, will be completed by 2012.

Greece is obliged to achieve a lower threshold of electric energy production from AES, which according to EU was established at 18% of the total energy production or total energy consumption which is also determined by the imported electric energy. In Greece, there are proposals for wind parks in sea and on small rocky islands. The advantage of Greece is the large number of small and large islands and the length of the country coasts, imposing an effective exploitation for the protection of the ecosystem. A study has proposed 20 islands in North and West Greece where off-shore wind parks can be installed. The aim of EU for the production of energy from alternative energy sources is at 21 % of the total production for 2010, Greece being at the 11^{th} position between the 27 member states, the total power of the wind units of Greece being at 1087 MW. In relation to the mean installed power per 1000 residents in EU, 133 KW, the mean power for Greece is 89 KW. In EU, the inland wind parks have a total power of 9581 MW and the off-shore ones 582 MW. 72% of the energy consumed in Greece is imported as electric energy and raw materials for the production of the energy, compared to 54% in the rest of EU. Kioto's objective for Greece intends that in 2020 the 29% of the total demanded energy should be obtained from alternative energy sources, including the hydroelectric. The intention for the energy production from wind generators is to reach 15% of the total produced energy.

Wind generators characterized by vertical rotation of the wings of the rotor currently predominate worldwide, however they present a complex geometry on the wings, which influences the wind flow around them, such as the shape, number and length thereof thus the yield of the wind generators is mainly due to the buoyancy which may increase ten times by the air resistance. An increase in the wing length leads to an increase in the height of the pillar of the wind generator. For the production of 1 MW, a wind generator having a 30-m pillar is required, while for a wind generator of 3 MW, the pillar height should be increased over ten times. It is obvious that height is critical, not only by limiting the productivity of a vertically rotating wind generator but also by influencing the aesthetic social and environmental result. The cost for the construction of the present invention, per 1 MW, is lower than with all other technical applications in AES.

Further technical problems include the fact that until today none of the inland or off-shore wind parks may establish a constant and continuous wind velocity, thus they do not have a constant yield and do not ensure maximum exploitation. Thus, the direct dependence from the weather conditions and the selection of the installation area influence the result significantly. Finally, also the other AES present problems which reduce their effectiveness significantly, such as a drop in the water level in a reservoir due to dry conditions in hydroelectric stations or limited sunshine in wind parks.

On the other hand, the present invention provides a solution in all problems which may emerge in an installation for energy production by wind or water. By using horizontally rotating sails, instead of the conventional vertically rotating wings on conventional wind generators, it provides more power with installations requiring smaller surface and lower height compared to conventional wind generators. Furthermore, the water energy of the buoyancy ensures a continuous, high-intensity, air flow to the sails, so that the operation of the wind generator is continuous. Further advantages of the construction is that the platform of the off-shore station may be installed practically everywhere, since it can be either a floating, anchored platform, a floating platform fixed on a concrete pillar, or an iron construction supported on concrete pillar, or a floating platform with submersed or non-submersed floats, or even a floating platform with wind generator only and an inland water energy unit in water wells. The inland station may be installed on small remote rocky inlands, in lakes, in water reservoirs of hydroelectric stations or even in other areas with water for filling the necessary water-buoyancy wells. Finally, respective wells may be constructed in already operating inland wind parks.

These and other features as well as advantages of the present invention will become apparent by the following detailed description. The invention will be fully understood with reference to the accompanying figures, which present an illustrative embodiment thereof.
Figure 1 shows a floating platform, floating with floats, and the water energy units immersed in the sea. A wind generator with the air turbines and the electricity generators of the water energy units are on the platform.
Figure 2 shows a plan view of the platform on which a wind generator with the horizontally rotating sails is installed, as well as the wind turbines and the electricity generators of the water energy units.
Figure 3 shows a cross-section of the wind generator, having a vertical suspension pillar for the rotor, which is at the top as well as the vertical spiral configuration of the sails.
Figure 4 shows the inland positioning of a wind generator of the described invention.
Figure 5 shows the well which is constructed and used in case of inland installation, in which the element of the water energy unit is immersed.
Figure 6 presents in cross-section the interior of the mechanism converting the buoyancy force to rotational force, wherein the electricity energy with the transmission box, the clutch for motion transmission, as well as a part of the buoyancy unit are shown, wherein the cylindrical shaft and the rotor thereof are shown, with an illustrative air-driven impeller and the conic toothed wheels transmitting the rotation motion to the electricity generator.
Figure 7 shows the system of a pair of horizontal cylindrical toothed wheels used for the transmission of the buoyancy force to the electricity generator by a clutch and a transmission box as an alternative to the mechanism converting buoyancy force to rotating force.
Figure 8 shows a floating platform with water energy units immersed in the sea, wherein the conversion of the buoyancy force to rotating is accomplished by the use of a mechanism alternative to Figure 7.
Figure 9 shows a cross-section of wind generator on a platform, as well as the buoyancy units, wherein instead of the air-driven impeller rotating the whole immersed element of the unit and of the conical toothed-wheel arrangement, they use the pair of horizontal cylindrical toothed wheels converting the buoyancy force to rotating force and transmitting to the electricity generator, of Figure 7.
Figure 10 shows the well in an alternative embodiment of the buoyancy unit, which uses the air-driven impeller and the pair of horizontal cylindrical toothed wheels of Figure 7.

Referring now to the accompanying figures, a preferred embodiment of the invention will be given.

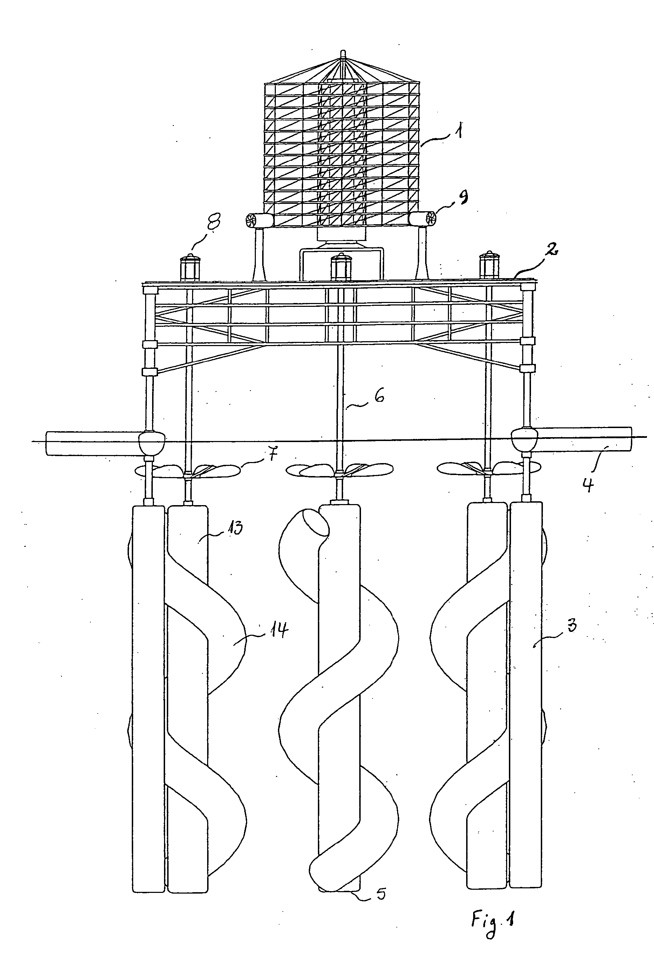

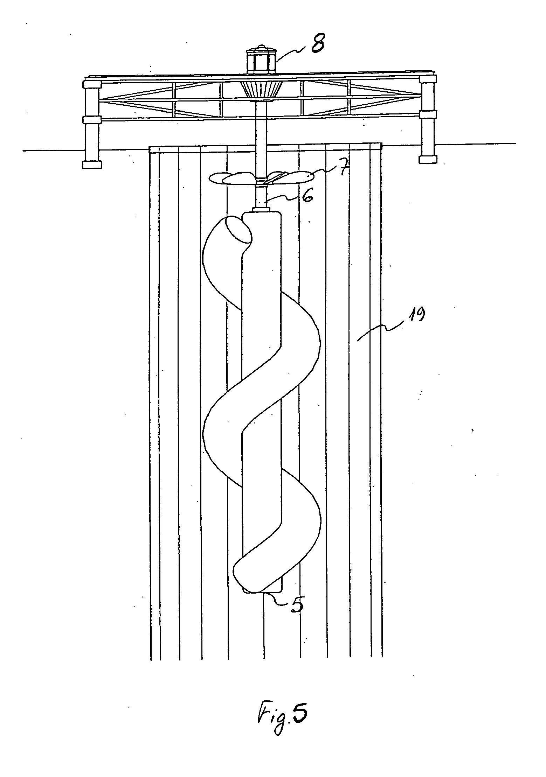

The present invention successfully combines the off-shore and inland installation of a energy production station totally from alternative sources. A great advantage thereof is that it can be installed both on a platform in the sea, as well as inland by means of wells for the installation of the water energy units exploiting the water buoyancy. The wind generator (1), Figure 1, in case of off-shore installation, is arranged on a platform (2). Exemplarily, the platform (2) has dimensions 30m×30m×2m, and is held at a height of 12m above the water surface. The platform is held at this height by means of four underwater floats (3), arranged at the ends of the platform (2) and having a total displacement equal to the total weight of the platform (2). In parallel, there are also eight floats (4) on the sea, which protect the platform (2) against turning-over. On the platform (2), the five water energy units (5) are connected, one of them at the center of the platform (2) and the other four at each side. The water energy sources (5) end at their upper part to a cylindrical axis (6), Figure 5, where there is a special air-driven impeller (7) of the buoyancy rotor. The cylindrical axes (6) having their bases on the platform (2) are connected to the mechanisms transmitting the rotational motion to the electricity generator (8).

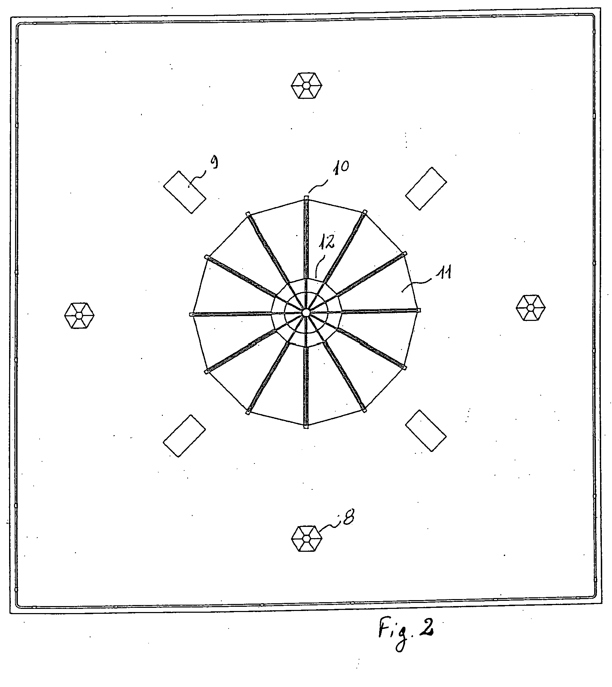

Further, on the platform (2) there are four air-turbines (9), Figures 1 and 2, of exemplary power of 25 kW, positioned by 90° around the wind generator (1), at an exemplary distance of 1 meter from its lower part, exemplarily it is a distance of 4 m from the surface of the platform (2). The presence of the air turbines (9) ensures the constant and continuous air flow, independent from the weather conditions. The air turbines (9) comprise an automated adjustment for simultaneous or successive activation of their electric motion or for the reduction of their power, so that 8-beaufort air for the motion of the wind generator (1) is continually provided, mechanically or in a natural way.

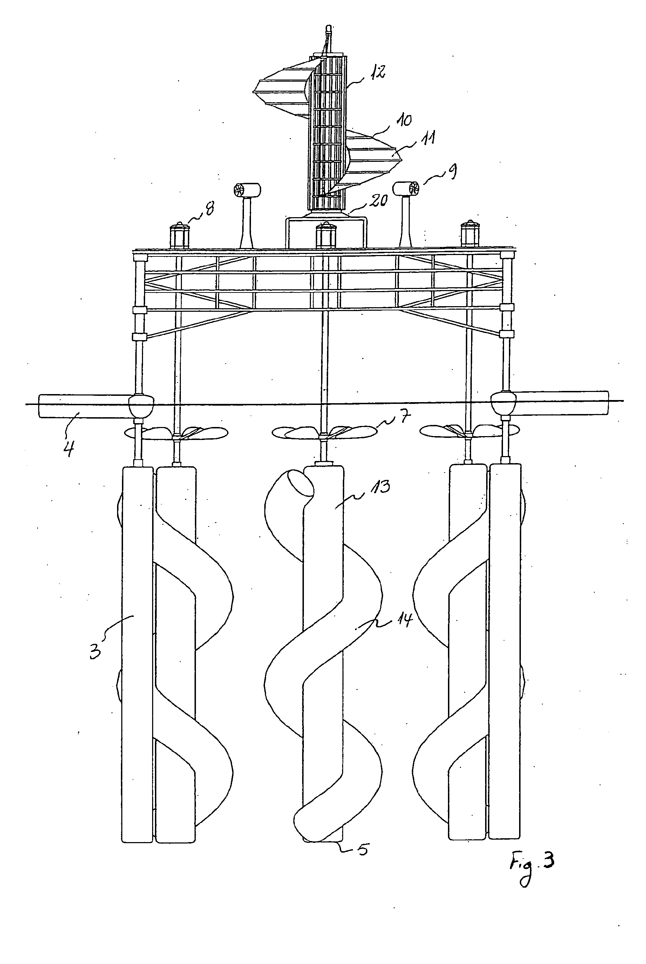

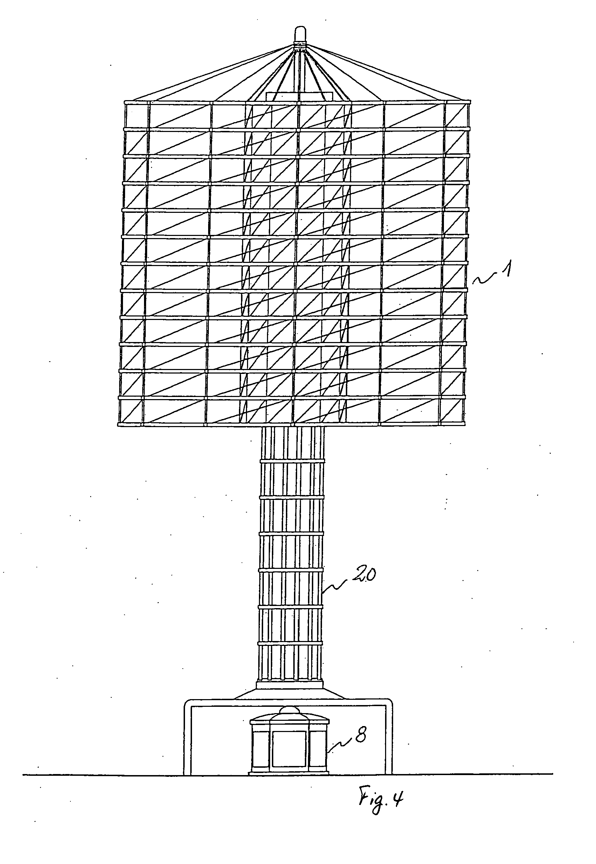

The wind generator (1) of the present invention consists of a vertical rotor (12), Figures 2 and 3, a dodecagon, which exemplarily has an outer diameter of described circle 3.5m and has horizontal rows of 12 sails (10), at each row, of exemplary length of 4 m each, with an angle of 30° between sails (10), their face being the angles of the sides of the dodecagon. The sides of the dodecagonal rotor (12) have an exemplary length of 91.58 cm. The distance between the tops of the 4-m sails (10) of each horizontal row is ca. 298 cm. The rotor (12) is internally supported on a vertical pillar (20) made of iron, which constitutes the base of the suspension bearing, Figure 3. This bearing consists of a conical bearing accommodating a pressure of 1 kg/cm³ on its friction surface. From the center of suspension and rotation of the rotor (12), which exemplarily has a height of 11 m, the motion is transmitted through its shaft to the electricity generator (8) arranged at the base of the pillar (20), Figure 3. The sails (11) are made e.g. from sailing fabric or any other suitable material, so that light weight is combined with high strength and they are developed diagonally between 2 sails (10) under an exemplary angle equal or less than 45°, so that 12 vertical spiral sail arrangements (11) are formed, of 12 sails each, Figures 2 and 3, with an exemplary area of each sail (11) at 10.256 m². The minimum number of sails (11) is 144 and thus there are 13 horizontal rows of the sails (10), if these are counted perpendicularly, figure 4. The ends of the 13 sails (10) are held by ropes which also allow their fall in case that the operation of the wind generator (1) must be stopped. Totally, on the 156 masts (10) of the 13 horizontal rows, there are 144 sails (11), of exemplary area of 1476 m², which are rotated by an air current of 8 beaufort created under the current weather conditions ore technically by the air turbines (9). The sails (11) provide exemplarily power of 739 kW only from the air resistance. In another example, if the height of the rotor (12) is increased four times, the sails (11) will be 576 and will provide power of 2954 kW only from the resistance of the air on the sails (11), and the total power of the whole assembly will be 8.33 MW.

The balance of the adjustable power of the array of air turbines (9) for the output of the air flow speed is achieved by the produced electric power of the electricity generators (8) using the water energy of the buoyancy. The advantage of this power balance is the continuous supply of energy of the water buoyancy under any weather conditions, which is converted to electric energy for the motion of the air turbines (9) providing the necessary air current for the operation of the wind generator (1) and of the other engines of the station. Under calm conditions, all the operating wind parks have zero power and work.

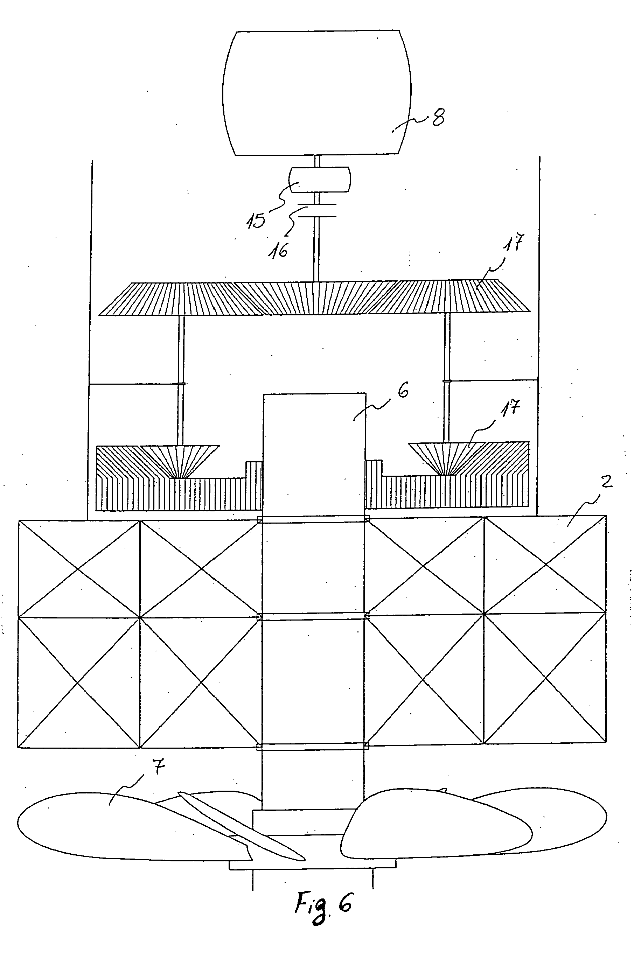

The unit for electricity production of the water energy of buoyancy was until now unknown. All the applications for the exploitation of the water energy do not use this technology. The energy of the water buoyancy has even a more constant yield from the sea tides and all the alternative energy sources. The energy of the water buoyancy is converted in the electricity generator (8) to electric energy and is calculated from the volume of the part of the water energy unit (5) remaining above the waterline and which is forced to be immersed vertically either in the well (19) of the inland station or in the sea in the case of an off-shore station, so that in the equation weight = displacement = buoyancy, the summation of the displacement is equal to the additional buoyancy provided as energy. The water energy unit (5) consists of a water-tight vertical cylindrical tube (13) having peripherally in spiral configuration a water-tight cylindrical tube of the same diameter (14), Figures 1 and 3. Exemplarily, the vertical tube has a length of 30 m and the spiral tube 42 m, the outer diameter being 3 m. The top of the water energy unit (5) ends at a shaft (6) at the base of the vertical support on the platform (2) and at the mechanism converting the buoyancy force to rotational motion, which is transmitted by a clutch (16) and a transmission box (15) to the electricity generator (8), Figures 1, 5 and 6. After the immersion of the buoyancy elements and the connection to the mechanisms converting the buoyancy force to rotational, which have their bases on the platform (2), the sea volume is transferred from the interior of the vertical cylindrical tubes (13) to the immersed (3) and on-sea floats (4), so that a further buoyancy does not raise the platform (2), instead of being converted to rotational force. For the operation of the mechanism converting the buoyancy force to rotational, the water energy unit (5), in a variation thereof, has at its upper part, a special air-driven impeller (7) for its rotation, figure 6. At its top, the water energy unit (5) is connected to an arrangement of conical toothed wheels (17) transmitting their rotational motion, via the clutch (16) and the transmission box (15) to the electricity generator (8).

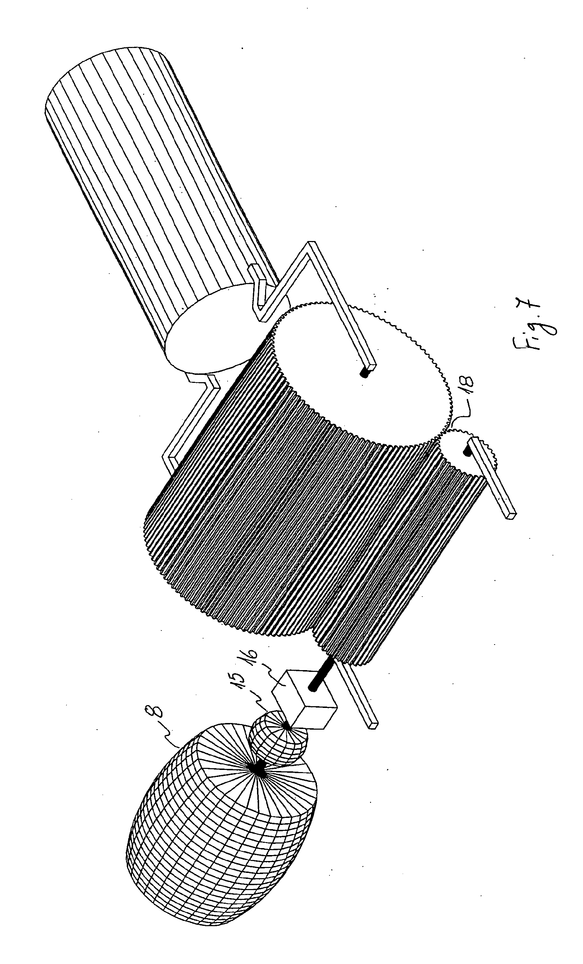

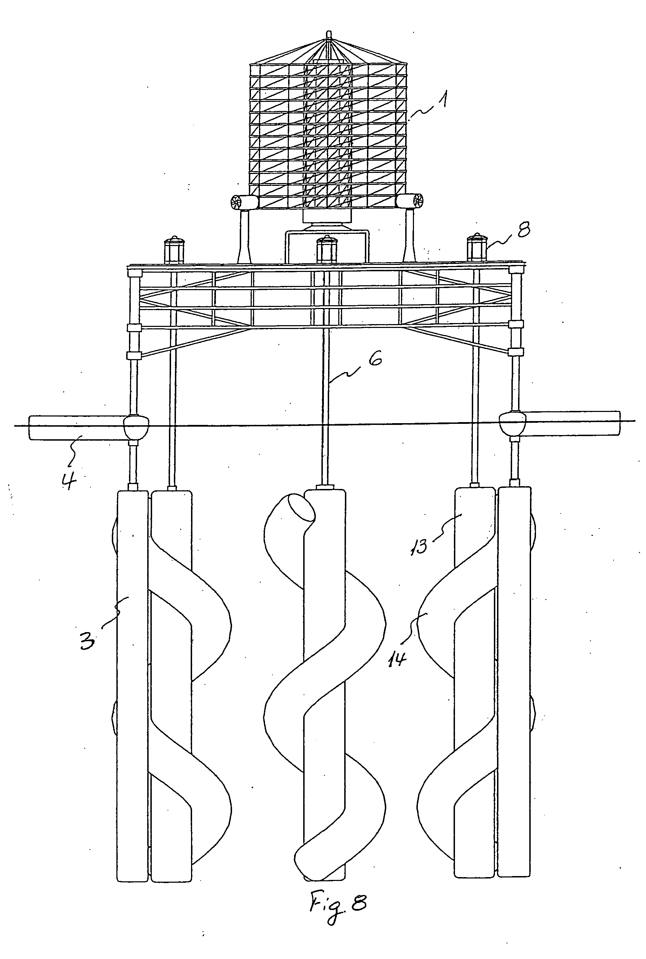

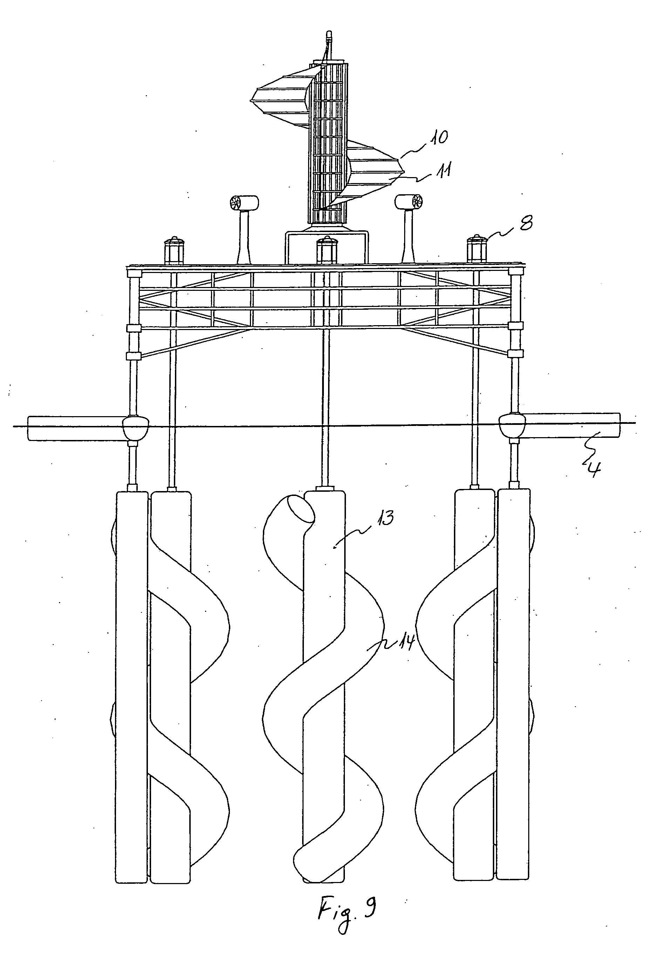

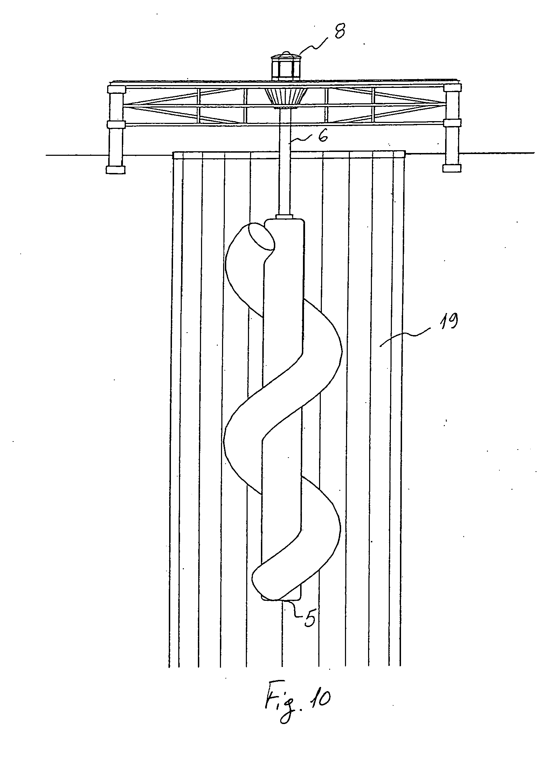

Alternatively, the mechanism converting the buoyancy force to rotational motion is realized by a suitable arrangement of a pair of horizontal cylindrical toothed wheels (18), Figure 7, of exemplary ratio between the diameters of the primary-secondary 3 to 1, the secondary one providing its rotation via a clutch (16) and a transmission box (15) to the electricity generator (8). Exemplarily, the five water buoyancy units provide power of 5.38 MW, i.e. 1.077 MW each unit. When this mechanism is used for the conversion of the buoyancy force, the variations in the construction of the water buoyancy unit (5) is presented in Figures 8, 9 and 10.

In case of the inland station, wells (19), Figure 5, having a diameter of 15 m and a depth of 40 m are constructed, which are filled with sea water or aqueous salt solution or other suitable liquids, and the water energy units (5) are immersed in these. By this way, the already existing wind parks can be exploited, as long as the wells (19) can be constructed under the earth.

It should be noted that the description of the invention was made with reference to an exemplary, non-limiting embodiment. Any alteration or modification regarding the shape, size, dimensions, construction and assembly materials and components employed, application fields, as long as not constituting an inventive step and not contributing to novelty, are considered encompassed in the present invention. The invention is industrially applicable, since the electric current produced by AES can be employed for the production of various products.

## Claims

1. Off-shore and/or inland, alternative energy source assembly, **characterized in that** it consists of a wind generator (1) with rows of spirally arranged sails (11), which are rotated horizontally and continuously, either in a natural way or by the use of air turbines (9) arranged peripherally to the wind generator (1), so that the force of the air current, natural or artificial, rotates the rotatable rotor (12) of the wind generator and with its vertical shaft transmits its rotational motion to an electricity generator (8), arranged at the base of the rotor suspension pillar (20) by means of a clutch (16) and a transmission box (15).

2. Off-shore and/or inland, alternative energy source assembly according to claim 1, **characterized in that** it comprises water energy units (5) with water buoyancy elements immersed in water, so that the summation of the displacement is equal to the additional buoyancy provided as energy and to the alternative energy source assembly as electric energy, necessary for the electric motion of the air turbines of the wind generator for its continuous operation the elements of the water buoyancy of the water energy units consist of a water-tight vertical cylindrical tube (13) having peripherally in spiral arrangement a water-tight cylindrical tube of equal diameter (14) and at their top they have a mechanism converting the buoyancy force to rotational motion which is transmitted by a clutch (16) and a transmission box (15) to the electricity generator (8) for the production of electric energy, using alternatively two mechanisms converting the buoyancy force to rotational motion.

3. Off-shore and/or inland, alternative energy source assembly according to claims 1 and 2, **characterized in that** the alternative mechanism converting the buoyancy force to rotational motion consists of a shaft (6) of the buoyancy element, which has an air-driven impeller (7) rotating the immersed element of the water energy unit (5), and is connected with an arrangement of conical toothed wheels (17) transmitting their rotational motion, via the clutch (16) and the transmission box (15), to the electricity generator (8).

4. Off-shore and/or inland, alternative energy source assembly according to claims 1 and 2, **characterized in that** the alternative mechanism converting the buoyancy force to rotational motion consists of a shaft (6) of the buoyancy element, which is connected to a pair of horizontal cylindrical toothed wheels (18) which convert the buoyancy force to rotational motion that is transmitted via the clutch (16) and the transmission box (15), to the electricity generator (8).

5. Off-shore and/or inland, alternative energy source assembly according to claims 1 and 2, **characterized in that** the wind generator (1), the electricity generators (8), the air turbines (9) and the water energy units (5) are installed either on a platform (2) held on the sea surface by means of floats lying on the sea (4) and submersed (3), or inland, wherein the water buoyancy element is immersed in a well (19) filled with sea water or aqueous solutions of salts.
